# EUROPÄISCHE PATENTSCHRIFT

(11) **EP 3 320 286 B1**
(45) Veröffentlichungstag und Bekanntmachung des Hinweises auf die Patenterteilung: **05.06.2019**
(21) Anmeldenummer: 16731084.6
(22) Anmeldetag: 15.06.2016
(51) Int. Cl.: F27B 3/10, F27B 3/20, F27D 99/00

(54) **SCHMELZMETALLURGISCHER OFEN**
MELT METALLURGICAL FURNACE
FOUR DE FUSION MÉTALLURGIQUE

(30) Priorität: 09.07.2015 DE 102015212828
(43) Veröffentlichungstag der Anmeldung: 16.05.2018
(73) Patentinhaber: SMS Group GmbH, 40237 Düsseldorf (DE)
(72) Erfinder: VOJ, Lukas Peter, 50858 Köln (DE); KRAUSE, Fabian, 40549 Düsseldorf (DE); GERMERSHAUSEN, Thomas, 40882 Ratingen (DE)
(74) Vertreter: Klüppel, Walter
(86) Internationale Anmeldenummer: PCT/EP2016/063674
(87) Internationale Veröffentlichungsnummer: WO 2017/005466

(56) Entgegenhaltungen:
- DE-A1- 2 339 312
- JP-A- 2005 009 803
- JP-A- 2005 069 581
- US-A- 2 224 081
- US-A1- 2013 161 881

## Beschreibung

Die Erfindung betrifft einen schmelzmetallurgischen Ofen zum Aufschmelzen von metallischem Material, insbesondere von Schrott, wobei der Ofen mindestens einen Brenner umfasst, mit dem Wärme in einen Aufnahmeraum für das metallische Material zugeführt werden kann, wobei der mindestens eine Brenner ausgebildet ist, einen vom Aufnahmeraum fluidisch getrennten und im Ofen angeordneten Heizraum zu beheizen, wobei der Ofen mindestens eine mit dem Heizraum fluidisch verbundene Abgasleitung aufweist, die ausgebildet ist, das Abgas des Verbrennungsprozesses kontaktfrei zum Aufnahmeraum vom Heizraum aus dem Ofen abzuleiten, wobei der Heizraum im Bodenbereich des Ofens angeordnet ist und wobei der Heizraum unterhalb einer Bodenplatte angeordnet ist, der den Boden des Aufnahmeraums bildet.

Ein Ofen der gattungsgemäßen Art ist aus der US 2013/161881 A1 bekannt. Ähnliche Lösungen zeigen die DE 23 39 312 A1, die JP 2005 009803 A und die US 2 224 081 A.

Ein anderer Ofen ist aus der EP 1 734 321 B1 bekannt. Hier wird in mehreren Ebenen mittels Düsen direkt in den Schrott brennbares Gas eingeblasen, so dass der Schrott erhitzt wird und aufschmelzen kann. Ähnliche und andere Lösungen offenbaren die EP 0 665 899 B1, die EP 0 770 690 B1, die US 5,078,368, die EP 0 237 852 B1, die JP 2008 175 478 A, die DE 689 16 236 T2, die EP 0 304 413 B1 und die JP 2005 069581 A.

Bekannt sind demgemäß diverse schmelzmetallurgische Öfen, wie der "Primary Energy Melter" (PEM), der Kupolofen und der Tiegelofen. Beim PEM sowie beim Kupol-Ofen durchströmt nachteilig das Brenngas den Ofenraum, so dass es zu chemischen Reaktionen im Schmelzgut kommen kann. Der Tiegelofen arbeitet nachteilig diskontinuierlich und erfordert ein Schmelzbad.

Somit ist bei manchen der vorbekannten Lösungen vorgesehen, dass ein verbrennendes Gas bzw. verbrennendes Öl auf bzw. in den Schrott geleitet wird, um diesen aufzuschmelzen. Nachteilig ist dabei, dass hierdurch zum einen die eingebrachte Energie des Primärbrennstoffs nicht immer optimal ausgenutzt wird. Zum anderen ergibt sich hierdurch, dass chemische Reaktionen beim direkten Beaufschlagen des Schrotts mit dem verbrennenden Medium erfolgen können, so dass verschiedene Emissionen, wie Staub und Kohlendioxid entstehen können.

Somit können nicht durchströmbare Schrottmischungen bzw. -schüttungen mit dem PEM bzw. mit dem Kupolofen nicht eingeschmolzen werden. Weiterhin entsteht bei den bekannten Einschmelzmethoden Abbrand am Einsatzstoff. Es fallen nachteilig hohe Mengen an Staub bzw. an Abgas an.

Der Erfindung liegt daher die Aufgabe zugrunde, einen gattungsgemäßen Ofen bereitzustellen, der diesbezüglich Verbesserungen aufweist. Ferner sollen im Schrott bzw. im aufzuschmelzenden Metall weniger chemische Veränderungen hervorgerufen werden. Schließlich soll ein kontinuierliches Einschmelzen des Schrotts mit Primärenergie möglich sein.

Die Lösung dieser Aufgabe durch die Erfindung ist dadurch gekennzeichnet, dass die Bodenplatte unter einem spitzen Winkel zur Horizontalen angeordnet ist, wobei der Winkel zwischen 2° und 30° liegt.

Gemäß einer bevorzugten Ausführungsform der Erfindung ist vorgesehen, dass zusätzlich eine elektrische Heizeinrichtung vorhanden ist, mit der der Aufnahmeraum beheizt werden kann.

Der mindestens eine Brenner ist insbesondere zum Verbrennen von Erdgas, Hochofengas oder Öl ausgebildet.

Der Ofen weist vorzugsweise einen inneren Ofenkern und einen diesen umgebenden Ofenmantel auf, wobei das Material des Ofenkerns eine höhere Wärmeleitfähigkeit aufweist als das Material des Ofenmantels.

Das Verfahren zum Betreiben eines solchen schmelzmetallurgischen Ofens zeichnet sich dadurch aus, dass das Aufschmelzen des metallischen Materials erfolgt, indem mit dem mindestens einen Brenner ein vom Aufnahmeraum fluidisch getrennter Heizraum beheizt wird, wobei die Führung des Abgases des Verbrennungsprozesses so geleitet wird, dass es keinen Kontakt mit dem metallischen Materials hat.

Das im Aufnahmeraum vorhandene metallische Material kann dabei unter einer Schutzgasatmosphäre gehalten werden. Alternativ ist es auch möglich, dass das im Aufnahmeraum vorhandene metallische Material gegenüber der Umgebung unter einem Unterdruck (d. h. in einem Vakuum) gehalten wird.

Gemäß einer Weiterbildung ist vorgesehen, dass der Aufnahmeraum zusätzlich mittels einer Elektroheizung geheizt wird.

Die vorgeschlagene Erfindung stellt also im Kern darauf ab, dass die Übertragung der Energie durch feuerfestes Material erfolgt, wobei sich dieses insbesondere auch zur Zwischenspeicherung von Energie eignet. Die Energieübertragung erfolgt über die Steine im Ofeninneren per Wärmeleitung und Wärmestrahlung und kann somit vorteilhaft auch unter Schutzgas oder im Vakuum erfolgen.

Da die Schmelze kontinuierlich abläuft, ist auch keine Überhitzung nötig.

Das aufgeheizte Feuerfestmaterial bietet somit in vorteilhafter Weise einen Energiepuffer.

Daher kann eine direkte Nutzung von Primärenergie erfolgen, d.h. es gibt keine Verluste durch die Stromerzeugung. Sehr vorteilhaft ist weiterhin, dass kein Kontakt des Brenngases bzw. Abgases mit der Schmelze bzw. dem Schrott erfolgt.

Schließlich ist kein Schmelzbad und somit keine Überhitzung nötig.

Durch die vorgeschlagene Lösung ist also sichergestellt, dass der aufzuschmelzende Schrott kontinuierlich durch den Einsatz von Primärenergie - bevorzugt in Form von Erdgas, Öl oder Hochofengas - ohne ein Schmelzbad möglich ist. Vorteilhaft kommt das verbrannte Medium, insbesondere das Brennabgas, nicht in Kontakt mit der Schmelze bzw. des Schrott. Hierdurch werden chemische Reaktionen vermieden.

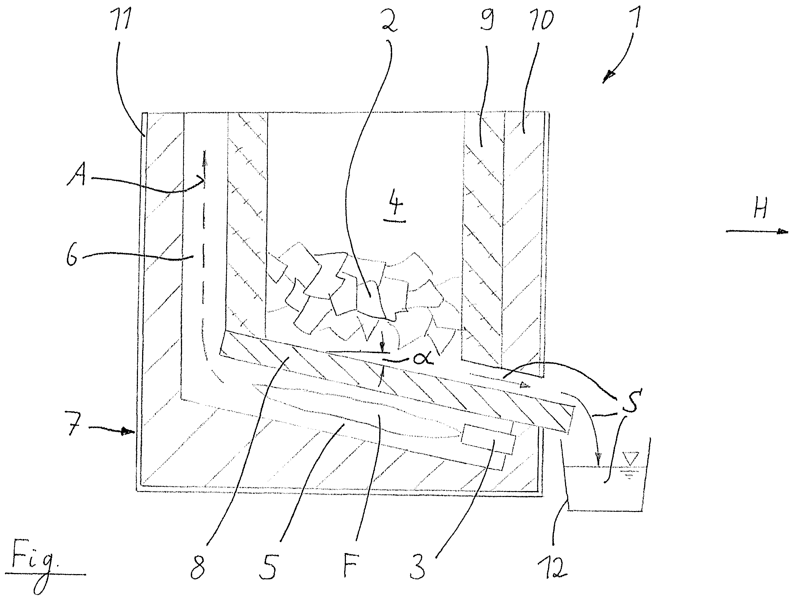

In der Zeichnung ist ein Ausführungsbeispiel der Erfindung dargestellt. Die einzige Figur zeigt schematisch den Schnitt durch einen schmelzmetallurgischen Ofen, in dem Schrott aufgeschmolzen wird.

In der Figur ist ein Ofen 1 zu erkennen, in dem Schrott 2 aufgeschmolzen werden soll.

Hierfür weist der Ofen 1 in seinem Bodenbereich 7 eine Bodenplatte 8 auf die einen Aufnahmeraum 4 für den Schrott 2 nach unten hin begrenzt. Generell gilt, dass der Ofen 1 von außen durch einen Stahlpanzer 11 begrenzt wird, der einen Ofenmantel 10 einfasst. Innerhalb des Ofenmantels 10 befindet sich der Ofenkern 9.

Unterhalb der Bodenplatte 8 ist mindestens ein (gegebenenfalls auch mehrteiliger) Heizraum 5 angeordnet, der von einem Brenner 3 beheizt wird.

Der Brenner 3 verbrennt dabei bevorzugt Erdgas, Öl oder Hochofengas, um durch Wärmeleitung und Wärmestrahlung über die Bodenplatte 8 den Aufnahmeraum 4 zu beheizen und so den sich in diesem befindlichen Schrott 2 aufzuschmelzen.

Der Ofenmantel 10 fungiert als feuerfeste Isolierung, während der Ofenkern 9 gleichfalls feuerfest ist, indes eine gute Wärmeleitung und eine hohe Wärmekapazität aufweist.

Der Brenner 3 ist dabei ausgebildet, den vom Aufnahmeraum 4 fluidisch getrennten Heizraum 5 zu beheizen. Dabei weist der Ofen 1 eine mit dem Heizraum 5 fluidisch verbundene Abgasleitung 6 auf, die ausgebildet ist, das Abgas des Verbrennungsprozesses kontaktfrei zum Aufnahmeraum 4 vom Heizraum 5 aus dem Ofen 1 abzuleiten.

Ist der Schrott 2 im Aufnahmeraum 4 aufgeschmolzen, kann er in Form einer Schmelze S in einen Aufnahmebehälter 12 ausfließen. Hierfür ist die Bodenplatte 8 unter einem kleinen Winkel α zur Horizontalen H ausgerichtet.

Wie in der Figur illustriert ist, erhitzt die Flamme F, die der Brenner 3 erzeugt, den Heizraum 5 unterhalb der Bodenplatte 8, wobei dann das Abgas A der Flamme F über die Abgasleitung 6 nach oben hin entweichen kann.

Nicht dargestellte elektrische Heizelemente ergänzen bzw. unterstützen die Erwärmung des Aufnahmeraums 4 zusätzlich zur Beheizung durch die Flamme F. Damit kann der benötigte Wärmebedarf im Aufnahmeraum 4 präzise nachgeregelt werden. Ferner ergibt sich durch die elektrische Nachheizung vorteilhaft, dass verbrauchte Energie (d. h. aus dem Aufnahmeraum 4 ausgetretene Wärme) und thermische Verluste ausgeglichen werden können.

Durch die erfindungsgemäße indirekte Beheizung kommen die Verbrennungsabgase (CO₂, H₂O) nicht in Kontakt mit dem metallischen Einsatz. Dadurch wird das metallische Ausbringen verbessert. Es entstehen vorteilhaft keine sekundären gasförmigen Emissionen, wie Staub und Kohlendioxid.

Es können auch belastete Einsatzmaterialien unter Schutzgas eingeschmolzen werden.

Während des Schmelzens wird die Energie der ablaufenden Schmelze und der Wandverluste nachgeführt. Dadurch kann die Temperatur der abfließenden Schmelze geregelt werden; es kommt zu keiner unnötig hohen Überhitzung der Schmelze.

Die Speicherfähigkeit der Ausmauerung des Ofens sorgt für einen gleichmäßigen Wärmestrom. Die Beheizung erfolgt in erster Linie über Wärmeleitung und Wärmestrahlung der Bodenplatte.

Das Abgas kann am Ofen nach oben abgeführt werden. Die Gastemperatur nimmt nach oben hin ab, die Ofenraumtemperatur nimmt nach unten hin zu.

### Bezugszeichenliste:

- 1: Ofen
- 2: metallisches Material (Schrott)
- 3: Brenner
- 4: Aufnahmeraum
- 5: Heizraum
- 6: Abgasleitung
- 7: Bodenbereich des Ofens
- 8: Bodenplatte
- 9: Ofen kern
- 10: Ofenmantel
- 11: Stahlpanzer
- 12: Aufnahmebehälter

- α: Winkel
- H: Horizontale
- F: Flamme
- A: Abgas
- S: Schmelze

## Patentansprüche

1. Schmelzmetallurgischer Ofen (1) zum Aufschmelzen von metallischem Material (2), insbesondere von Schrott, wobei der Ofen (1) mindestens einen Brenner (3) umfasst, mit dem Wärme in einen Aufnahmeraum (4) für das metallische Material (2) zugeführt werden kann, wobei der mindestens eine Brenner (3) ausgebildet ist, einen vom Aufnahmeraum (4) fluidisch getrennten und im Ofen (1) angeordneten Heizraum (5) zu beheizen, wobei der Ofen (1) mindestens eine mit dem Heizraum (5) fluidisch verbundene Abgasleitung (6) aufweist, die ausgebildet ist, das Abgas des Verbrennungsprozesses kontaktfrei zum Aufnahmeraum (4) vom Heizraum (5) aus dem Ofen (1) abzuleiten, wobei der Heizraum (5) im Bodenbereich (7) des Ofens (1) angeordnet ist und wobei der Heizraum (5) unterhalb einer Bodenplatte (8) angeordnet ist, der den Boden des Aufnahmeraums (4) bildet,
**dadurch gekennzeichnet**,
die Bodenplatte (8) unter einem spitzen Winkel (α) zur Horizontalen (H) angeordnet ist, wobei der Winkel (α) zwischen 2° und 30° liegt.

2. Ofen nach Anspruch 1, **dadurch gekennzeichnet, dass** zusätzlich eine elektrische Heizeinrichtung vorhanden ist, mit der der Aufnahmeraum (4) beheizt werden kann.

3. Ofen nach Anspruch 1 oder 2, **dadurch gekennzeichnet, dass** der mindestens eine Brenner (3) zum Verbrennen von Erdgas, Hochofengas oder Öl ausgebildet ist.

4. Ofen nach einem der Ansprüche 1 bis 3, **dadurch gekennzeichnet, dass** der Ofen einen inneren Ofenkern (9) und einen diesen umgebenden Ofenmantel (10) aufweist, wobei das Material des Ofenkerns (9) eine höhere Wärmeleitfähigkeit aufweist als das Material des Ofenmantels (10).

## Claims

1. Smelting metallurgical furnace (1) for the smelting of metallic material (2), particularly scrap, wherein the furnace (1) comprises at least one burner (3), by which heat can be supplied to a receiving space (4) for the metallic material (2), wherein the at least one burner (3) is constructed to heat a heating chamber (5) which is in fluid separation from the receiving space (4) and arranged in the furnace (1), wherein the furnace (1) has at least one exhaust gas flue (6), which is in fluid connection with the heating chamber (5) and which is constructed to discharge the exhaust gas of the combustion process from the heating chamber (5) out of the furnace (1) without contact with the receiving space (4), wherein the heating chamber (5) is arranged in the base region (7) of the furnace (1) and wherein the heating chamber (5) is arranged below a base plate (8) forming the base of the receiving space (4), **characterised in that** the base plate (8) is arranged at an acute angle (α) to the horizontal (H), wherein the angle (α) lies between 2° and 30°.

2. Furnace according to claim 1, **characterised in that** an electrical heating device by which the receiving space (4) can be heated is additionally present.

3. Furnace according to claim 1 or 2, **characterised in that** the at least one burner (3) is constructed for combustion of natural gas, blast furnace gas, or oil.

4. Furnace according to any one of claims 1 to 3, **characterised in that** the furnace has an inner furnace core (9) and a furnace casing (10) surrounding this, wherein the material of the furnace core (9) has a higher thermal conductivity than the material of the furnace casing (10).

## Revendications

1. Four de fusion pour la métallurgie (1) destiné à la mise en fusion d'une matière métallique (2), en particulier de la ferraille; dans lequel le four (1) comprend au moins un brûleur (3) avec lequel de la chaleur peut être acheminée dans un espace de réception (4) destiné à la matière métallique (2) ; dans lequel ledit au moins un brûleur (3) est réalisé pour chauffer un espace de chauffage (5) disposé dans le four (1) et séparé, du point de vue des fluides, de l'espace de réception (4) ; dans lequel le four (1) présente au moins un conduit (6) destiné aux gaz d'échappement, relié par fluide à l'espace de chauffage (5), qui est réalisé de manière à évacuer les gaz d'échappement du processus de combustion en l'absence de contact par rapport à l'espace de réception (4) depuis l'espace de chauffage (5) jusqu'à l'extérieur du four (1) ; dans lequel l'espace de chauffage (5) est disposé dans la zone de base (7) du four (1) ; et dans lequel l'espace de chauffage (5) est disposé en dessous d'une plate-forme de base (8) qui forme la base de l'espace de réception (4), **caractérisé en ce que** la plate-forme de base (8) est disposée en formant un angle aigu (a) par rapport à l'horizontale (H) ; dans lequel l'angle (a) se situe entre 2° et 30°.

2. Four selon la revendication 1, **caractérisé en ce qu'**on prévoit en outre un dispositif de chauffage électrique avec lequel on peut chauffer l'espace de réception (4).

3. Four selon la revendication 1 ou 2, **caractérisé en ce que** ledit au moins un brûleur (3) est réalisé pour la combustion de gaz naturel, de gaz de haut-fourneau ou de pétrole.

4. Four selon l'une quelconque des revendications 1 à 3, **caractérisé en ce que** le four présente un noyau de four interne (9) et une enveloppe de four (10) qui l'entoure ; dans lequel la matière du noyau de four (9) présente une conductibilité thermique supérieure à celle de la matière de l'enveloppe de four (10).
